# EUROPEAN PATENT APPLICATION

(11) **EP 1 574 928 A1**
(43) Date of publication of application: **14.09.2005**
(21) Application number: 02790723.7
(22) Date of filing: 12.12.2002
(51) Int. Cl.: G06F 1/00

(54) **PROGRAM EXECUTION CONTROL APPARATUS, OS, CLIENT TERMINAL, SERVER, PROGRAM EXECUTION CONTROL SYSTEM, PROGRAM EXECUTION CONTROL METHOD, AND PROGRAM EXECUTION CONTROL PROGRAM**

(71) Applicant: FUJITSU LIMITED, Kanagawa 211-8588 (JP)
(72) Inventor: KAMADA, Jun, FUJITSU LIMITED, Kawasaki-shi, Kanagawa 211-8588 (JP); HASEBE, Takayuki, FUJITSU LIMITED, Kawasaki-shi, Kanagawa 211-8588 (JP); OKADA, Souichi, FUJITSU LIMITED, Kawasaki-shi, Kanagawa 211-8588 (JP); HAYASHI, Takehiko, FUJITSU LIMITED, Kawasaki-shi, Kanagawa 211-8588 (JP)
(74) Representative: Sunderland, James Harry
(86) International application number: PCT/JP2002/013006
(87) International publication number: WO 2004/053664

(57) **Abstract**

A program execution control device adapted to authorize execution of a program specified in advance comprises an expected value table storage section that stores at least a set of an expected value obtained by applying a predetermined function to the program specified in advance and the identifier of the specified program, an input interface that allows at least a set of an input program and the identifier of the input program to be input externally, a function operating section that acquires a computed value by applying a predetermined function to the input program, a comparing section that compares the expected value corresponding to the identifier of the input program out of the expected values in the expected value table and the computed value and an output interface that externally outputs the input program in response to agreement of the compared two values.

## Description

### Technical Field

This invention relates to a program execution control device adapted to authorize execution of only authenticated proper programs, an operating system (OS), a client terminal, a server, a program execution control system, a program execution control method and a program execution control program.

### Background Art

More and more mobile phones, IC (integrated circuit) cards and other similar devices have been connected to networks by wires and wirelessly in recent years. As a result, it has been made possible to use these devices for electronic commercial transactions including electronic settlements of accounts, electronic applications and the like, which require security. Since there are a huge variety of services provided for such actions, it is not possible for a user of such a device to install programs in his or her device in advance for all such services. Therefore, it will be indispensably necessary for the user to dynamically download only the programs that are required for the service he or she wants to receive and drive them to operate.

From the security point of view, it is important to guarantee that only the authorized programs are being driven on the device only for the period during which the device is operating for the service and that a server providing the service can see the list of the programs being driven to operate on the device. Then, the server can suspend the service for the purpose of security if it is found that any unauthorized program is being driven on the device. Known techniques relating to security include the TCPA (Trusted Computing Platform Alliance), the technique of driver signature of the OS and that of authentication of the program that is externally downloaded and executed.

The TCPA is a technique of adding a special security chip to a client terminal such as PC (personal computer) or mobile terminal. It is aimed to guarantee the security of the entire environment of the client terminal including software. According to the current specification of that technique, the following processing operation is conducted when the client terminal is started to operate and hence pieces of software including a BIOS (basic input/output system), a boot program, an OS loader and an OS are sequentially started to operate.

Firstly, in the client terminal the code contained in the BIOS computes the hash value of the boot program that is to be started next and stores the obtained value in the security chip of the system before it hands over the control of operation to the boot program. The hash value is computed by applying a one-directional function to the object that is the object of execution. Then, the boot program computes the hash value of the OS loader and stores it in the security chip of the system in a similar manner before it hands over the control of operation to the OS loader. Next, the OS loader computes the hash value of the OS and stores it in the security chip of the system in a similar manner before it hands over the control of operation to the OS. Then, the client terminal sends back the group of hash values computed in the above-described manner to an external entity, which may be the server and generate a request at any timing, in response to the request from it, or the server.

Thus, as a result of the above-described processing operation, the server can see a list of the programs that are currently being executed or have been executed at the client terminal in the form of hash values and also if an unauthorized program is being driven to operate at the client terminal or not. If it is found that an unauthorized program is being driven to operate at the client terminal, the server can suspend the services it provides to the client terminal under its control.

Additionally, some OSs have a feature of refusing installation of a device driver that is not carrying a due signature, although a device driver carrying no due signature may be installed if the user authorizes to do so.

Some virtual machines adapted to download programs externally and execute them at the client terminal have a feature of refusing execution of a program that is not carrying a due signature or that of authorizing execution of a program that is not carrying a due signature but restricting the scope of operation of the program. With such an arrangement, it is possible to prevent to install an unauthorized driver and refuse execution of an unauthorized program.

However, if the TCPA can externally see if any unauthorized software is being driven to operate, it cannot control it so as not to be driven to operate. Additionally, the TCPA covers the start of an OS. In other words, once the OS is started, it cannot hold any programs under its control.

Still additionally, with regard to the signature of a driver of an OS, the processing operation of verifying the signature and that of refusing installation of a driver that is not carrying a due signature if the result of verification says so are realized by software. In other words, the feature of preventing installation of an unauthorized driver can be made ineffective by illegally altering the part of the OS responsible for the above processing operations. Furthermore, with regard to authentication a program to be externally downloaded and executed, since the virtual machine adapted to download programs is also realized by software as is the case with the signature of a driver, the feature of refusing any unauthorized program can be made ineffective by illegally altering the software.

The present invention is intended to dissolve the above identified problems. Therefore, it is an object of the present invention to provide a program execution control device that allows execution of programs by an OS by handing over to the OS only the programs described in the list of programs that the tampering-resistance hardware provided in a device has acquired from a server in advance by a secure means and also securely stores the list of the programs being executed by the OS in the hardware so as to securely notify the server thereof in response to an request from the server as well as an OS, a client terminal, a server, a program execution control system, a program execution control method and a program execution control program adapted to be used with such a control device.

### Disclosure of the Invention

Thus, in an aspect of the present invention, there is provided a program execution control device adapted to authorize execution of a program specified in advance; characterized by comprising: an expected value table storage section that stores at least a set of an expected value obtained by applying a predetermined function to the program specified in advance and an identifier of the specified program; an input interface that allows at least a set of an input program and the identifier of the input program to be input externally; a function operating section that acquires a computed value by applying a predetermined function to the input program; a comparing section that compares the expected value corresponding to the identifier of the input program out of the expected values in the expected value table and the computed value; and an output interface that externally outputs the input program in response to agreement of the compared two values.

With the above-described arrangement, the program execution control device, which is hardware, intemally holds information necessary for confirming that the input program is a specified program and, at the same time, controls the operation of authorizing or refusing execution of the input program in order to raise the security level. Note that the expected value table storage section and the function operating section correspond respectively to the expected value table storage section 36 and the operational hash value computing section 34 of an embodiment of the present invention as will be described hereinafter while the comparing section corresponds to the comparing section 35 and the output interface corresponds to the input/output interface 31 and the gate 38 of the embodiment.

Preferably, a program execution control device according to the invention is characterized in that the predetermined function is a one-directional function and the expected value and the computed value refer to respective hash values.

With such an arrangement, it is possible to judge if the input program is the specified program or not by using the hash value computed by applying the one-directional function to the input program.

Preferably, a program execution control device according to the invention is characterized by further comprising a computed value table storage section that stores at least a set of the identifier of the input program being executed and a computed value, and being adapted to externally output the set of the identifier of the input program and a computed value in accordance with an external request.

With such an arrangement, it is possible to externally confirm the program that is currently being executed by externally outputting information relating to the program currently being executed.

In another aspect of the present invention, there is provided an OS using a program execution control device according to the invention, the OS being adapted to input the input program to the program execution control device and execute the input program in response to an output of the input program from the program execution control device.

With the above-described arrangement, the OS is allowed to execute only the program that is specified in advance because the program execution control device is responsible for judging if the program to be executed by the client terminal is a specified program or not.

In still another aspect of the present invention, there is provided a client terminal equipped with a program execution control device according to the invention, the client terminal being adapted to input the externally input program to the program execution control device and execute the input program in response to an output of the input program from the program execution control device.

With the above-described arrangement, the client terminal is allowed to execute only the program that is specified in advance because the program execution control device is responsible for judging if the program to be executed by the client terminal is a specified program or not.

In still another aspect of the present invention, there is provided a client terminal equipped with a program execution control device according to the invention; and adapted to externally output the set of the identifier of the input program and a computed value in accordance with an external request.

With the above-described arrangement, it is possible to externally confirm the program that is currently being executed by externally outputting information relating to the program currently being executed.

In still another aspect of the present invention, there is provided a server adapted to be connected to a client terminal according to the invention by way of a network; and transmit the set of the identifier of the specified program and an expected value to the client terminal in advance and, if necessary, the input program also to the client terminal.

With the above-described arrangement, it is possible for the server that transmits a specified program to specify the program to be authorized for execution by transmitting information on the specified program in advance.

In still another aspect of the present invention, there is provided a server adapted to be connected to a client terminal according to the invention by way of a network; and transmit a request for a set of the identifier of the program being executed at the client terminal and a computed value to the client terminal so as to confirm the input program being executed at the client terminal according to the received set of the identifier and the computed value.

With the above-described arrangement, it is possible for the server to monitor if the client terminal is executing the specified program or not.

In still another aspect of the present invention, there is provided a program execution control system adapted to authorize execution of a program specified in advance, the system comprising: a client terminal according to the invention; and a server adapted to be connected to a client terminal according to the invention by way of a network and transmit the set of the identifier of the specified program and an expected value to the client terminal in advance and, if necessary, the input program also to the client terminal.

With the above-described arrangement, it is possible for the server that transmits a specified program to specify the program to be authorized for execution by transmitting information on the specified program in advance and the client terminal is allowed to execute only the program that is specified in advance.

In still another aspect of the present invention, there is provided a program execution control system adapted to authorize execution of a program specified in advance, the system comprising: a client terminal according to the invention; and a server adapted to be connected to a client terminal according to the invention by way of a network and transmit a request for a set of the identifier of the program being executed at the client terminal and a computed value to the client terminal so as to confirm the input program being executed at the client terminal according to the received set of the identifier and the computed value.

With the above-described arrangement, it is possible for the server to monitor if the client terminal is executing the specified program or not.

In still another aspect of the present invention, there is provided a program execution control method adapted to authorize execution of a program specified in advance; the method comprising: a step of storing at least a set of an expected value obtained by applying a predetermined function to the program specified in advance and an identifier of the specified program; a step of externally inputting at least a set of an input program and the identifier of the input program; a step of acquiring a computed value by applying a predetermined function to the input program; a step of comparing the expected value corresponding to the identifier of the input program and the computed value acquired in the function operating step out of sets of expected values and identifiers; and a step of externally outputting the input program in response to agreement of the compared two values.

With the above-described arrangement, it is possible to control the operation of authorizing or refusing execution of the input program in order to raise the security level by using the information for confirming that the input program is a specified program.

In still another aspect of the present invention, there is provided a program execution control program readably stored in a storage device by means of a computer in order to cause a computer to execute only a program specified in advance, the program comprising: a step of storing at least a set of an expected value obtained by applying a predetermined function to the program specified in advance and an identifier of the specified program; a step of externally inputting a set of an input program and the identifier of the input program; a step of acquiring a computed value by applying a predetermined function to the input program; a step of comparing the expected value corresponding to the identifier of the input program and the computed value acquired in the function operating step out of sets of expected values and identifiers; and a step of externally outputting the input program in response to agreement of the compared two values.

With the above-described arrangement, it is possible to control the operation of authorizing or refusing execution of the input program in order to raise the security level by using the information for confirming that the input program is a specified program.

In still another aspect of the present invention, there is provided a program execution control device adapted to authorize execution of a program specified in advance; the device comprising: an expected value table storage section that stores at least a set of an expected value obtained by applying a predetermined function to the program specified in advance and an identifier of the specified program; a decoding key storage section that stores a decryption key input in advance; an input interface that allows an encrypted program, the program having encrypted a set of an input program and the identifier of the input program, to be input externally; a decrypting section that decrypts the encrypted program by means of the decryption key and generating the decrypted program and the identifier of the decrypted program; a function operating section that acquires a computed value by applying a predetermined function to the decrypted program; a comparing section that compares the expected value corresponding to the identifier of the decrypted program out of the expected values in the expected value table and the computed value acquired by the function operating section; and an output interface that externally outputs the decrypted program in response to agreement of the compared two values.

With the above-described arrangement, the program execution control device, which is hardware, intemally holds information necessary for confirming that the input program is a specified program and, at the same time, controls the operation of authorizing or refusing execution of the decrypted program in order to raise the security level. Note that the decryption key storage section and the decrypting section correspond respectively to the decryption key storage section 33 and the decrypting section 32 of an embodiment of the present invention as will be described hereinafter.

Preferably, a program execution control device according to the invention is characterized in that the predetermined function is a one-directional function and the expected value and the computed value refer to respective hash values.

With such an arrangement, it is possible to judge if the decrypted program is the specified program or not by using the hash value computed by applying the one-directional function to the decrypted program.

Preferably, a program execution control device according to the invention is characterized by further comprising a computed value table storage section that stores at least a set of the identifier of the decrypted program being executed and a computed value, and being adapted to externally output the set of the identifier of the decrypted program and a computed value in accordance with an external request.

With such an arrangement, it is possible to externally confirm the program that is currently being executed by externally outputting information relating to the program currently being executed.

In another aspect of the present invention, there is provided an OS using a program execution control device according to the invention, the OS being adapted to input the encrypted program to the program execution control device and execute the decrypted program in response to an output of the decrypted program from the program execution control device.

With the above-described arrangement, the OS is allowed to execute only the program that is specified in advance because the program execution control device is responsible for judging if the program to be executed by the OS is a specified program or not.

In still another aspect of the present invention, there is provided a client terminal equipped with a program execution control device according to the invention, the client terminal being adapted to input the externally input encrypted program to the program execution control device and execute the decrypted program in response to an output of the decrypted program from the program execution control device.

With the above-described arrangement, the client terminal is allowed to execute only the program that is specified in advance because the program execution control device is responsible for judging if the program to be executed by the client terminal is a specified program or not.

In still another aspect of the present invention, there is provided a client terminal equipped with a program execution control device according to the invention, and adapted to externally output the set of the identifier of the decrypted program and a computed value in accordance with an external request.

With the above-described arrangement, it is possible to externally confirm the program that is currently being executed by externally outputting information relating to the program currently being executed.

In still another aspect of the present invention, there is provided a server adapted to be connected to a client terminal according to the invention by way of a network, and the server transmits the set of the identifier of the specified program and an expected value to the client terminal in advance and, if necessary, the encrypted program also to the client terminal.

With the above-described arrangement, it is possible for the server that transmits a specified program to specify the program to be authorized for execution by transmitting information on the specified program in advance.

In still another aspect of the present invention, there is provided a server adapted to be connected to a client terminal according to the invention by way of a network, and the server transmits a request for a set of the identifier of the program being executed at the client terminal and a computed value to the client terminal so as to confirm the decrypted program being executed at the client terminal according to the received set of the identifier and the computed value.

With the above-described arrangement, it is possible for the server to monitor if the client terminal is executing the specified program or not.

In still another aspect of the present invention, there is provided a program execution control system adapted to authorize execution of a program specified in advance, the system comprising: a client terminal according to the invention; and a server adapted to be connected to the client terminal according to the invention by way of a network and transmit the set of the identifier of the specified program and an expected value to the client terminal in advance and, if necessary, the encrypted program also to the client terminal.

With the above-described arrangement, it is possible for the server that transmits a specified program to specify the program to be authorized for execution by transmitting information on the specified program in advance and the client terminal is allowed to execute only the program that is specified in advance.

In still another aspect of the present invention, there is provided a program execution control system adapted to authorize execution of a program specified in advance, the system comprising: a client terminal according to the invention; and a server adapted to be connected to the client terminal according to the invention by way of a network and transmit a request for a set of the identifier of the program being executed at the client terminal and a computed value to the client terminal so as to confirm the decrypted program being executed at the client terminal according to the received set of the identifier and the computed value.

With the above-described arrangement, it is possible for the server to monitor if the client terminal is executing the specified protection or not.

In still another aspect of the present invention, there is provided a program execution control method adapted to authorize execution of a program specified in advance; the method comprising: a step of storing at least a set of an expected value obtained by applying a predetermined function to the program specified in advance and the identifier of the specified program; a step of storing a decryption key input in advance; a step of externally inputting an encrypted program, the program having encrypted a set of an input program and the identifier of the input program; a step of decrypting the encrypted program by means of the decryption key and generating the decrypted program and the identifier of the decrypted program; a step of acquiring a computed value by applying a predetermined function to the decrypted program; a step of comparing the expected value corresponding to the identifier of the decrypted program and the computed value acquired in the function operating step out of sets of expected values and identifiers; and a step of externally outputting the decrypted program in response to agreement of the compared two values.

With the above-described arrangement, it is possible to control the operation of authorizing or refusing execution of the decrypted program in order to raise the security level by using the information for confirming that the decrypted program is a specified program.

In still another aspect of the present invention, there is provided a program execution control program readably stored in a storage device by means of a computer in order to cause a computer to execute only a program specified in advance, the program comprising: a step of storing at least a set of an expected value obtained by applying a predetermined function to the program specified in advance and an identifier of the specified program; a step of storing a decryption key input in advance; a step of externally inputting an encrypted program, the program having encrypted a set of an input program and the identifier of the input program; a step of decrypting the encrypted program by means of the decryption key and generating the decrypted program and the identifier of the decrypted program; a step of acquiring a computed value by applying a predetermined function to the decrypted program; a step of comparing the expected value corresponding to the identifier of the decrypted program and the computed value acquired in the function operating step out of sets of expected values and identifiers; and a step of externally outputting the decrypted program in response to agreement of the compared two values.

With the above-described arrangement, it is possible to control the operation of authorizing or refusing execution of the decrypted program in order to raise the security level by using the information for confirming that the decrypted program is a specified program.

### Brief Description of the Drawings

FIG. 1 is a schematic block diagram of an embodiment of program execution control system according to the invention, illustrating the configuration thereof;
FIG. 2 is a schematic block diagram of an embodiment of client terminal according to the invention, illustrating the configuration thereof;
FIG 3 is a schematic block diagram of an embodiment of program execution control device according to the invention, illustrating the configuration thereof;
FIG 4 is a schematic block diagram of the functional part of an embodiment of program execution control device according to the invention, illustrating the configuration thereof;
FIG. 5 is a flow chart of the processing operation of an embodiment of OS according to the invention at the time of program execution; and
FIG. 6 is a flow chart of the processing operation of an embodiment of program execution control device according to the invention at the time of program execution.

### Best Mode for Carrying out the Invention

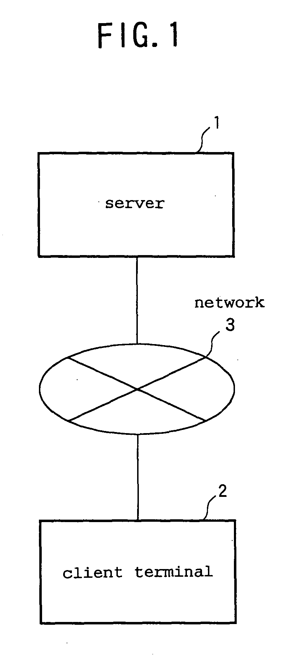

Now, an embodiment of the present invention will be described in greater detail by referring to the accompanying drawings. FIG 1 is a schematic block diagram of an embodiment of program execution control system according to the invention, illustrating the configuration thereof. Referring to FIG 1, the program execution control system comprises a server 1 and client terminals 2 that are connected to each other by a network 3. The server 1 and the client terminals 2 transmit and receive data by way of the network 3. In the following description of this embodiment, the illustrated client terminal 2 is a PC. While FIG. 1 shows only a single client terminal 2 for the purpose of simplicity, a plurality of client terminals 2 are connected to the network 3. The server 1 and the client terminal 2 authenticate each other to confirm that the partner is reliable when communicating with each other. Subsequently, the server 1 and the client terminal 2 actually communicate with each other by way of an encrypted communication path.

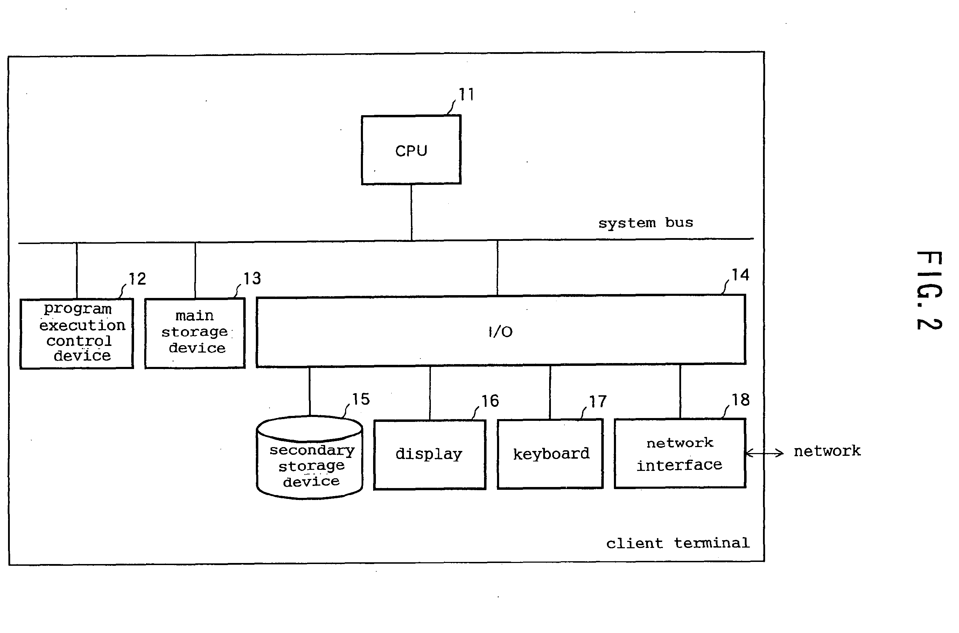

Now, the client terminal 2 will be described below in detail. FIG 2 is a schematic block diagram of an embodiment of client terminal according to the invention, illustrating the configuration thereof. Referring to FIG 2, the client terminal 2 comprises a CPU (central processing unit) 11, a program execution control device 12, a main storage device 13, an I/O (input/output) unit 14, a secondary storage device 15, a display 16, a keyboard 17 and a network interface 18. The program execution control device 12, the main storage device 13 and the I/O unit 14 are connected to the CPU 11 by way of a system bus while the secondary storage device 15, the display 16, the keyboard 17 and the network interface 18 are connected to the I/O unit 14.

The CPU 11 executes an OS and programs. The program execution control device 12 decrypts the program to be executed and makes necessary judgments. The main storage device 13 is used to make the OS and the various programs to operate properly. It typically comprises a memory. The secondary storage device 15 is used to store the OS and the various programs to be executed at the client terminal 2. It typically comprises a hard disk drive. The display 16 operates for displaying information according to the command from the CPU 11. The keyboard 17 is adapted to receive information inputs by the user and output them to the CPU 11. The network interface 18 exchanges programs and data with the server 1 connected to it by way of the network 3.

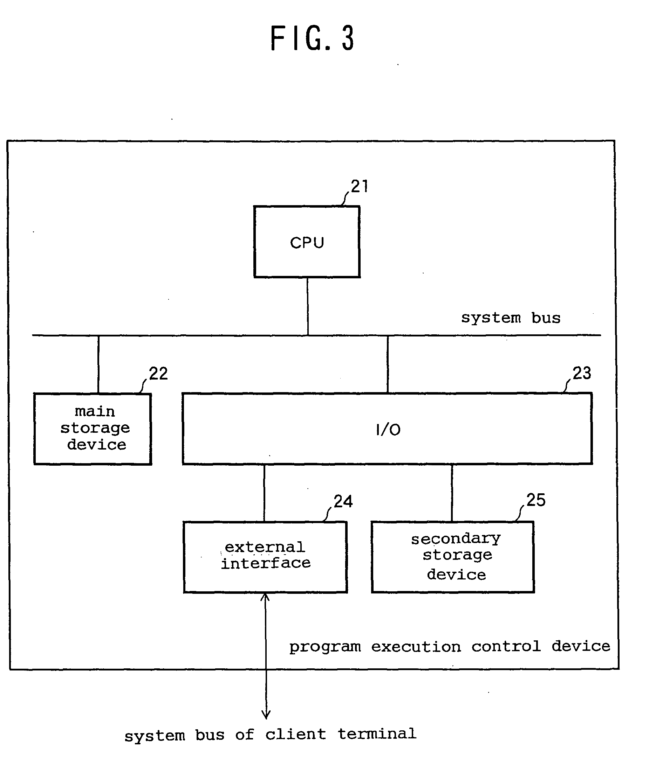

Now, the program execution control device 12 will be described below in detail. FIG. 3 is a schematic block diagram of an embodiment of program execution control device according to the invention, illustrating the configuration thereof. Referring to FIG. 3, the program execution control device 12 comprises a CPU 21, a main storage device 22, an I/O unit 23, an external interface 24 and a secondary storage device 25. The main storage device 22 and the I/O unit 23 are connected to the CPU 21 by way of a system bus while the external interface 24 and the secondary storage device 25 are connected to the I/O unit 23.

The CPU 21 controls the other components of the program execution control device 12. The main storage device 22 is used to make the program execution control software to operate properly. It typically comprises a memory. The external interface 24 exchanges data with the outside. It is connected to the client terminal 2 by way of a system bus. The secondary storage device 25 is used to store the software to be executed by the program execution control device 12. It typically comprises a nonvolatile memory.

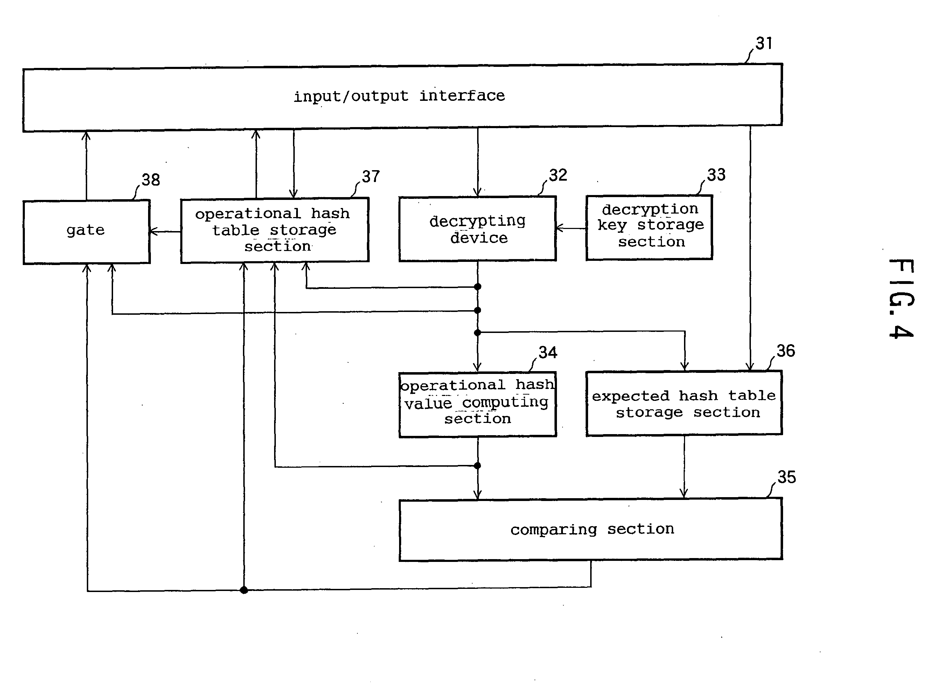

Now, the function of the program execution control device 12 will be described below. FIG. 4 is a schematic block diagram of the functional part of an embodiment of program execution control device according to the invention, illustrating the configuration thereof. Referring to FIG. 4, the functional part of the program execution control device comprises an input/output interface 31, a decrypting section 32, a decryption key storage section 33, an operational hash value computing section 34, a comparing section 35, an expected hash table storage section 36, an operational hash table storage section 37 and a gate 38.

The input/output interface 31, the decrypting section 32, the operational hash value computing section 34, the comparing section 35 and the gate 38 are realized by the software stored in the secondary storage device 25. The software is read by the main storage device 22 and subsequently executed by the CPU 21. The decryption key storage section 33, the expected hash table storage section 36 and the operational hash table storage section 37 are arranged in the main storage device 22 or the secondary storage section 25 and respectively stores a decryption key, an expected hash table and an operational hash table. Note, however, that the input/output interface 31, the decrypting section 32, the operational hash value computing section 34, the comparing section 35 and the gate 38 may be realized by hardware.

Now the program execution control system, in which the client terminal 2 is adapted to execute only the programs specified by the server 1, will be described below. Firstly, the processing operation of the client terminal 2 for downloading the expected hash table will be discussed. An expected hash table is a list of the specified programs that the server 1 authorizes the client terminal 2 to execute and includes sets of the program ID of a specified program and an expected hash value. The program ID is an ID specific to the program.

Firstly, the server 1 applies a one-directional function to a specified program to compute a hash value that is to be used as expected hash value. Then, the server 1 prepares an entry of a set of the program ID of a specified program and a computed expected hash value. In this way, the server 1 prepares as many entries as the number of specified necessary programs and also an expected hash table. Then, the server 1 transmits the prepared expected hash table to the client terminal 2. On the other hand, the OS of the client terminal 2 receives the expected hash table from the server 1 and outputs it to the program execution control device 12. The input/output interface 31 of the program execution control device 12 by turn outputs the expected hash table input from the OS to the expected hash table storage section 36. The expected hash table storage section 36 then stores the expected hash table. Thus, the processing operation of downloading the expected hash table at the client terminal 2 proceeds in the above-described manner.

Now, the processing operation of downloading a program at the client terminal 2 will be described below. Firstly, the server 1 generates an encrypted program by encrypting the combination of the program ID of the specified program to be transmitted to the client terminal 2 and the program. Then, the server 1 transmits the encrypted program to the client terminal 2. On the other hand, the OS of the client terminal 2 receives the encrypted program from the server 1 and stores it in the secondary storage device 15 of the client terminal 2. Thus, the processing operation of downloading a program at the client terminal 2 proceeds in the above-described manner.

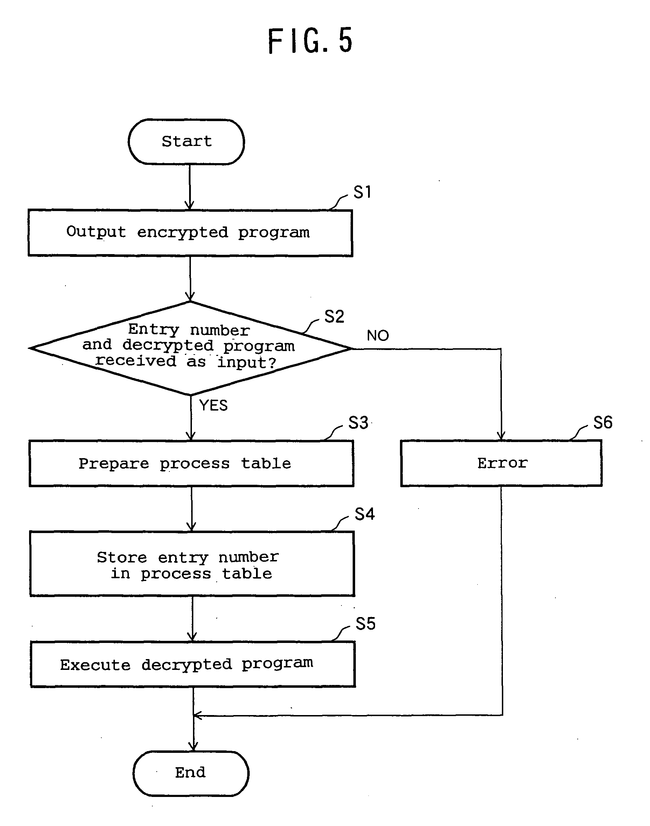

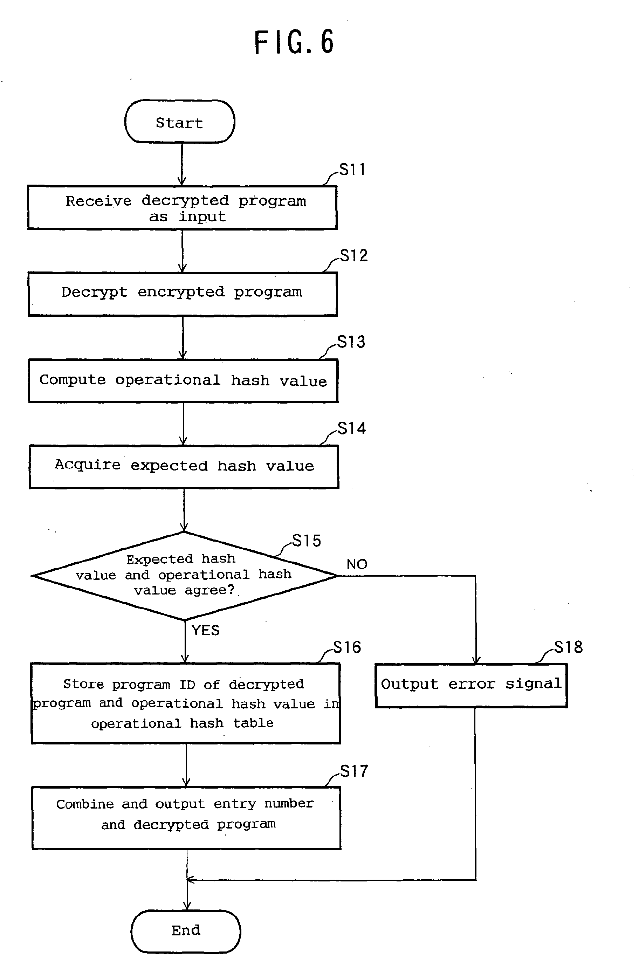

Now, the operation of executing a program at the client terminal 2 will be described below. FIG 5 is a flow chart of the processing operation of the OS at the time of program execution. FIG. 6 is a flow chart of the processing operation of the program execution control device at the time of program execution. Firstly, the user issues a command for executing a program by way of the keyboard 17. Then, the OS takes out the encrypted program specified by way of the keyboard 17 from the secondary storage device 15 and outputs it to the program execution control device 12 (S1). Alternatively, the OS may directly output the encrypted program received from the server 1 to the program execution control device 12 without storing it in the secondary storage device 15.

The encrypted program output from the OS to the program execution control device 12 is input to the input/output interface 31 (S11). The input/output interface 31 outputs the encrypted program to the decrypting section 32. Then, the decrypting section 32 decrypts the encrypted program by means of the decryption key of the decryption key storage section 33 and generates the decrypted program and the program ID of the decrypted program (S12). The decryption key is acquired externally from the server 1 or some other site and stored in the decryption key storage section 33 in advance. The decrypted program is then output to the gate 38 and the operational hash value computing section 34, whereas the program ID of the decrypted program is output to the expected hash table storage section 36 and the operational hash table storage section 37.

The operational hash value computing section 34 computes a hash value by applying a one-directional function to the decrypted program and uses it as operating hash value (S13). The operational hash value is then output to the comparing section 35 and the operational hash table storage section 37. the comparing section 35 acquires the expected hash value that corresponds to the program ID of the decrypted program from the expected hash table storage section 36 (S14) and compares the expected hash value and the operational hash value to determine if the expected hash value and the operational hash value agree with each other or not (S15).

If the expected hash value and the operational hash value agree with each other (S15, Y), the operational hash table storage section 37 combines the program ID of the decrypted program and the operational hash value to form a set and stores it as an unused entry of the operational hash table. Then, the operational hash table storage section 37 outputs the entry number of the stored entry to the gate 38 (S16). The gate 38 combines the entry number and the decrypted program and outputs them to the OS by way of the input/output interface 31 (S17) to end the sequence of operation. If, on the other hand, the expected hash value and the operational hash value do not agree with each other (S15, N), the gate 38 outputs an error signal to the OS by way of the input/output interface 31 (S18) and ends the sequence of operation.

If, on the other hand, the OS that has output the encrypted program to the program execution control device 12 receives an entry number and the decrypted program as input from the program execution control device 12 (S2, Y), it operates that acquires the memory for process placement, placing the process, acquiring the process table and defining the management information (S3) and then stores the entry number in the process table (S4). Thereafter, the OS executes the decrypted program (S5) and end the sequence. If the OS that has output the encrypted program to the program execution control device 12 receives an error signal as input from the program execution control device 12 (S2, N), it does not execute the program and ends the sequence. Thus, the operation of executing the program is conducted in the above-described manner. The OS can execute only the specified program that the OS is authorized to execute by the server by handing over the program to the program execution control device before executing it.

Now, the operation of ending the execution of a program will be described below. When the OS ends the decrypted program that is being executed, it outputs the entry number that corresponds to the decrypted program being executed to the program execution control device 12 and asks it to delete the entry of the operational hash table. Then, the OS frees the memory for process placement and the process table.

The input/output interface 31 of the program execution control device 12 outputs the entry number it receives as input from the OS to the operational hash table storage section 37. The operational hash table storage section 37 by turn deletes the entry number it receives as input and puts a mark of "unused" to it. This can be done typically by clearing the entry that corresponds to the input entry number. The operation of ending the execution of a program is conducted in the above-described manner. As a result of the operation of ending the execution of a program, only the entry of the set of the program ID of the decrypted program that is being executed and the operational hash value is stored in the operational hash table storage section 37 of the program execution control device 12.

Now, the operation of confirming the execution of programs by the server 1 will be described below. Firstly, the server 1 transmits a request that acquires all or part of the entries in the operational hash table 37 to the client terminal 2.

On the other hand, as the OS of the client terminal 2 receives the request that acquires the operational hash table from the server 1, it outputs the request that acquires the operational hash table to the program execution control device 12. The operational hash table storage section 37 of the program execution control device 12 receives the request that acquires the operational hash table by way of the input/output interface 31. The operational hash table storage section 37 outputs the specified entries of the operational hash table according to the request that acquires the operational hash table to the OS by way of the input/output interface 31. Then, the OS transfers the specified entries to the server 1. As the server 1 receives the entries, it can confirm the list of the decrypted programs being executed at the client terminal 2. The operation of confirming the execution of programs by the server 1 is conducted in the above-described manner.

While the above-described embodiment is so adapted that the server transmits a specified and encrypted program and the client terminal receives, decodes and executes the encrypted program, a program execution control device according to the invention can accommodate an unencrypted program. If such is the case, the decrypting section 32 and the decryption key storage section 33 in FIG. 4 are not necessary. Additionally, while the server 1 is adapted to transmit an expected hash table and an encrypted program to the client terminal 2 in the above-described embodiment, an expected hash table and an encrypted program may be externally input to the client terminal 2 by means of a portable recording medium or the like.

### Industrial Applicability

As described above in detail, according to the invention, the client terminal can drive only proper programs authenticated by the server and the operation of authorizing or refusing execution of the input program is controlled not by means of software but by means of hardware in order to raise the security level. Additionally, the list of the programs being currently executed is securely held by the hardware of the client terminal as operational hash table so that the server can reliably acquire information on the programs being driven at the client terminal.

## Claims

1. A program execution control device adapted to authorize execution of a program specified in advance; **characterized by** comprising:
an expected value table storage section that stores at least a set of an expected value obtained by applying a predetermined function to said program specified in advance and an identifier of said specified program;
an input interface that allows at least a set of an input program and the identifier of the input program to be input externally;
a function operating section that acquires a computed value by applying a predetermined function to said input program;
a comparing section that compares the expected value corresponding to the identifier of said input program out of the expected values in said expected value table and said computed value; and
an output interface that externally outputs said input program in response to agreement of said compared two values.

2. The program execution control device according to claim 1, **characterized in that**
said predetermined function is a one-directional function and said expected value and said computed value refer to respective hash values.

3. The program execution control device according to claim 1, **characterized by** further comprising:
a computed value table storage section that stores at least a set of the identifier of said input program being executed and a computed value; and
being adapted to externally output said set of the identifier of said input program and a computed value in accordance with an external request.

4. An OS using a program execution control device according to claim 1;
said OS being adapted to input said input program to said program execution control device and execute said input program in response to an output of said input program from said program execution control device.

5. A client terminal equipped with a program execution control device according to claim 1;
said client terminal being adapted to input said externally input program to said program execution control device and execute said input program in response to an output of said input program from said program execution control device.

6. A client terminal equipped with a program execution control device according to claim 3; and
adapted to externally output said set of the identifier of said input program and a computed value in accordance with an external request.

7. A server adapted to be connected to a client terminal according to claim 5 by way of a network; and
transmit said set of the identifier of said specified program and an expected value to said client terminal in advance and, if necessary, said input program also to said client terminal.

8. A server adapted to be connected to a client terminal according to claim 6 by way of a network; and
transmit a request for a set of the identifier of the program being executed at said client terminal and a computed value to said client terminal so as to confirm said input program being executed at said client terminal according to the received set of the identifier and the computed value.

9. A program execution control system adapted to authorize execution of a program specified in advance, said system comprising:
a client terminal according to claim 5; and
a server adapted to be connected to a client terminal according to the invention by way of a network and transmit said set of the identifier of said specified program and an expected value to said client terminal in advance and, if necessary, said input program also to said client terminal.

10. A program execution control system adapted to authorize execution of a program specified in advance, said system comprising:
a client terminal according to claim 6; and
a server adapted to be connected to a client terminal according to the invention by way of a network and transmit a request for a set of the identifier of the program being executed at said client terminal and a computed value to said client terminal so as to confirm said input program being executed at said client terminal according to the received set of the identifier and the computed value.

11. A program execution control method adapted to authorize execution of a program specified in advance; said method comprising:
a step of storing at least a set of an expected value obtained by applying a predetermined function to said program specified in advance and an identifier of said specified program;
a step of externally inputting at least a set of an input program and the identifier of the input program;
a step of acquiring a computed value by applying a predetermined function to said input program;
a step of comparing the expected value corresponding to the identifier of said input program and said computed value acquired in said function operating step out of sets of expected values and identifiers; and
a step of externally outputting said input program in response to agreement of said compared two values.

12. A program execution control program readably stored in a storage device by means of a computer in order to cause a computer to execute only a program specified in advance, said program comprising:
a step of storing at least a set of an expected value obtained by applying a predetermined function to said program specified in advance and an identifier of said specified program;
a step of externally inputting a set of an input program and the identifier of the input program;
a step of acquiring a computed value by applying a predetermined function to said input program;
a step of comparing the expected value corresponding to the identifier of said input program and said computed value acquired in said function operating step out of sets of expected values and identifiers; and
a step of externally outputting said input program in response to agreement of said compared two values.

13. A program execution control device adapted to authorize execution of a program specified in advance; said device comprising:
an expected value table storage section that stores at least a set of an expected value obtained by applying a predetermined function to said program specified in advance and an identifier of said specified program;
a decoding key storage section that stores a decryption key input in advance;
an input interface that allows an encrypted program, said program having encrypted a set of an input program and the identifier of the input program, to be input externally;
a decrypting section that decrypts said encrypted program by means of said decryption key and generating the decrypted program and the identifier of the decrypted program;
a function operating section that acquires a computed value by applying a predetermined function to said decrypted program;
a comparing section that compares the expected value corresponding to the identifier of said decrypted program out of the expected values in said expected value table and said computed value acquired by the function operating section; and
an output interface that externally outputs said decrypted program in response to agreement of said compared two values.

14. The program execution control device according to claim 13, **characterized in that**
said predetermined function is a one-directional function and said expected value and said computed value refer to respective hash values.

15. The program execution control device according to claim 13, **characterized by** further comprising:
a computed value table storage section that stores at least a set of the identifier of said decrypted program being executed and a computed value; and
being adapted to externally output said set of the identifier of said decrypted program and a computed value in accordance with an external request.

16. An OS using a program execution control device according to claim 13;
said OS being adapted to input said encrypted program to said program execution control device and execute said decrypted program in response to an output of said decrypted program from said program execution control device.

17. A client terminal equipped with a program execution control device according to claim 13;
said client terminal being adapted to input said externally input encrypted program to said program execution control device and execute said decrypted program in response to an output of said decrypted program from said program execution control device.

18. A client terminal equipped with a program execution control device according to claim 15; and
adapted to externally output said set of the identifier of said decrypted program and a computed value in accordance with an external request.

19. A server adapted to be connected to a client terminal according to claim 17 by way of a network; and
transmit said set of the identifier of said specified program and an expected value to said client terminal in advance and, if necessary, said encrypted program also to said client terminal.

20. A server adapted to be connected to a client terminal according to claim 18 by way of a network; and
transmit a request for a set of the identifier of the program being executed at said client terminal and a computed value to said client terminal so as to confirm said decrypted program being executed at said client terminal according to the received set of the identifier and the computed value.

21. A program execution control system adapted to authorize execution of a program specified in advance, said system comprising:
a client terminal according to claim 17; and
a server adapted to be connected to a client terminal according to the invention by way of a network and transmit said set of the identifier of said specified program and an expected value to said client terminal in advance and, if necessary, said encrypted program also to said client terminal.

22. A program execution control system adapted to authorize execution of a program specified in advance, said system comprising:
a client terminal according to claim 18; and
a server adapted to be connected to a client terminal according to the invention by way of a network and transmit a request for a set of the identifier of the program being executed at said client terminal and a computed value to said client terminal so as to confirm said decrypted program being executed at said client terminal according to the received set of the identifier and the computed value.

23. A program execution control method adapted to authorize execution of a program specified in advance; said method comprising:
a step of storing at least a set of an expected value obtained by applying a predetermined function to said program specified in advance and the identifier of said specified program;
a step of storing a decryption key input in advance;
a step of externally inputting an encrypted program, said program having encrypted a set of an input program and the identifier of the input program;
a step of decrypting said encrypted program by means of said decryption key and generating the decrypted program and the identifier of the decrypted program;
a step of acquiring a computed value by applying a predetermined function to said decrypted program;
a step of comparing the expected value corresponding to the identifier of said decrypted program and said computed value acquired in the function operating step out the sets of expected values and identifiers; and
a step of externally outputting said decrypted program in response to agreement of said compared two values.

24. A program execution control program readably stored in a storage device by means of a computer in order to cause a computer to execute only a program specified in advance, said program comprising:
a step of storing at least a set of an expected value obtained by applying a predetermined function to said program specified in advance and an identifier of said specified program;
a step of storing a decryption key input in advance;
a step of externally inputting an encrypted program, said program having encrypted a set of an input program and the identifier of the input program;
a step of decrypting said encrypted program by means of said decryption key and generating the decrypted program and the identifier of the decrypted program;
a step of acquiring a computed value by applying a predetermined function to said decrypted program;
a step of comparing the expected value corresponding to the identifier of said decrypted program and said computed value acquired in the function operating step out the sets of expected values and identifiers; and
a step of externally outputting said decrypted program in response to agreement of said compared two values.
